Europäisches Patentamt

European Patent Office

Office européen des brevets

(11) Publication number: **0 226 428**
**A2**

## (12) EUROPEAN PATENT APPLICATION

(21) Application number: **86309550.1**

(22) Date of filing: **08.12.86**

(51) Int. Cl.4: **G02B 26/10**

(30) Priority: **06.12.85 GB 8530150**

(43) Date of publication of application:
**24.06.87 Bulletin 87/26**

(84) Designated Contracting States:
**AT BE CH DE ES FR GB IT LI LU NL SE**

(71) Applicant: **ECONOMAIR PANCAN LIMITED**
**25 Powis Terrace**
**London W11 1JJ(GB)**

(72) Inventor: **Wynne-Wilson, Peter David**
**51 Lissenden Mews**
**London NW5(GB)**

(74) Representative: **Brown, David Alan et al**
**MATHYS & SQUIRE 10 Fleet Street**
**London EC4Y 1AY(GB)**

(54) **Beam-scanning device.**

(57) A beam-scanning device has a first mirror housing mounted for rotation about a vertical axis and a second mirror housing mounted for rotation relative to the first housing about a horizontal axis. An incident light beam can be reflected to any required direction by appropriate scanning movements of the two housings.

EP 0 226 428 A2

# BEAM-SCANNING DEVICE

This invention relates to beam-scanning devices for use, in one example, in the entertainments field.

It is a common requirement to produce a beam of light which may be scanned in a controlled manner. The scanning may be continuous, following for example a performer or other moving subject, or may be intermittent in the case, for example, where lighting in a multi-purpose area is required to be redirected to suit a change in usage. If the scanning is to be controlled manually there are obvious limitations upon the siting of the light source. Moreover, manual control of a large number of such light sources will often be unacceptable for economic reasons. There is thus a demand for remotely controllable beam-scanning devices.

Devices have been produced which can be remotely controlled to scan a beam through panning and tilting movement of a mirror in a frame carried on the filter mount of a spotlight. Such devices offer significant advantages over arrangements where the light source is scanned bodily, but are restricted in the angular extent of the possible scanning movement. This may not be important in the case where the required scanning movement is limited to the extent of a stage, for example, but is a handicap where it is desired to light a large multi-purpose area. In addition, the structure of such and other known devices is relatively complicated.

Accordingly, it is an object of this invention to provide a beam-scanning device which is capable of directing an incident beam in substantially any desired reflected direction. It is a further object of this invention to provide a beam-scanning device which is of relatively simple construction and which lends itself in a straightforward manner to computer control.

Accordingly, the present invention consists in a beam-scanning device comprising a first reflecting element having a defined incident direction and mounted for controlled scanning movement to reflect a beam along a selected first reflected direction orthogonal to said incident direction; a second reflecting element supported to move bodily in unison with scanning movement of the first reflecting element so that light reflected from the first reflecting element is always incident upon the second reflecting element, the second reflecting element being mounted for controlled scanning movement to reflect the beam along a selected second reflected direction orthogonal to the first reflected direction, whereby the device is capable of directing an incident beam in substantially any desired reflected direction.

Advantageously, each reflecting element is fixedly mounted in a respective housing, the first housing being mounted for rotation about said defined incident direction and the second housing being mounted for rotation relative to the first housing about the first reflected direction.

The invention will now be described by way of example with reference to the accompanying drawings in which:-

Figure 1 is a diagram illustrating one form of the present invention,

Figure 2 is a partly diagrammatic view of one embodiment of the invention,

Figure 3 is a side view of a further embodiment of the invention,

Figure 4 is a plan view of the embodiment shown in Figure 3.

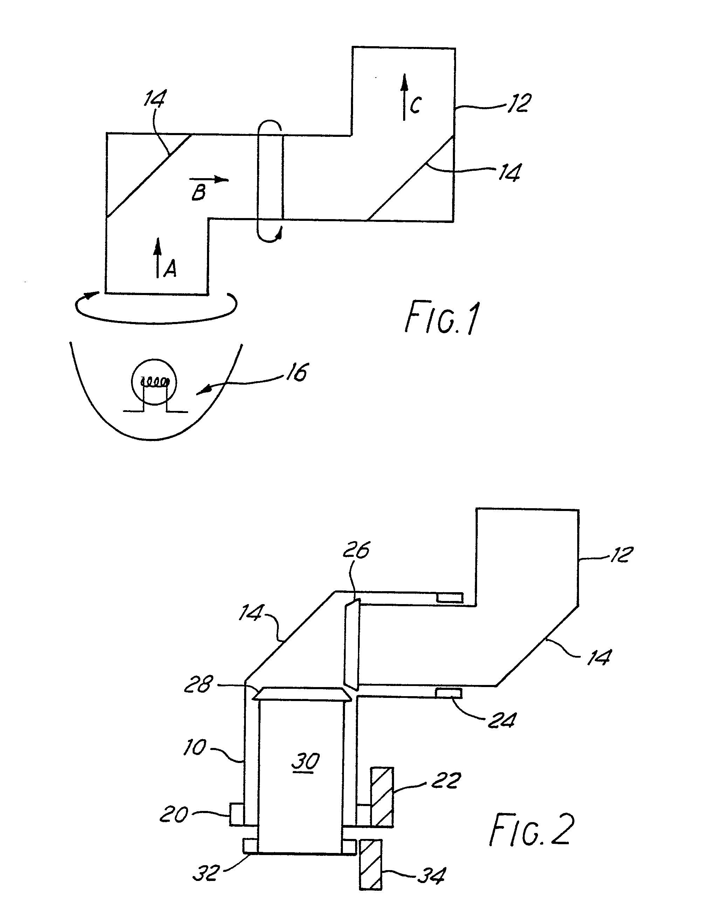

Referring to Figure 1, the device comprises two hollow L-shaped elements shown at 10 and 12 respectively. Each element comprises orthogonal limbs of circular cross section with a mirror 14 positioned at the junction of the two limbs and disposed at 45° to both limbs.

The first element 12 is aligned to receive along one limb axis a beam of light from source 16. The axis of the incident beam is marked A in Figure 1. The first element 10 is mounted for rotation about the axis A and it will be understood that, through this rotation, the direction of the reflected beam from the mirror of the first element (marked B in Figure 1) may be swept in a horizontal plane through 360°.

The second element 12 is secured to the first element with one limb axis aligned with the direction B. It is ensured in this manner that light reflected from the first mirror is always incident upon the second mirror. Through a suitable connection, the second element may be rotated with respect to the first about the axis B. It will be understood that in this manner, with the first element stationary, a beam along the first reflected direction B may be reflected in a second reflected direction marked C which may be swept through 360° in a vertical plane.

With suitable scanning movements of the first element about the axis A and the second element about the axis B, light may be reflected in substantially any direction provided that, as will typically be the case, the distance of the point to which light is to be directed is very large compared with the distance between the two mirrors 14.

It will be apparent to the skilled man that a very wide variety of mechanisms can be employed to produce the required scanning movement. One such mechanism will now be described with reference to Figure 2. Components common to Figure 1 have been given the same reference numerals.

The first element 10 is provided at the end adjacent the light source with an annular gear 20 engaging a drive worm 22. The opposite end of the first element 10 carries a bearing 24 in which is rotatably mounted the inner limb of the second element 12. This inner limb of the element 12 extends within the first element and carries at its innermost end an annular bevel gear 26. This bevel gear 26 meshes with a like annular bevel gear 28 which is carried on a hollow drive sleeve 30 arranged coaxially within the outer limb of the first element 10. The opposite end of the drive sleeve 30 is provided with an annular gear 32 enmeshed with a drive worm 34.

It will be understood that driving the worm 22 through, for example, a servo-motor, will cause the first element 10 to be rotated about the axis A. Similarly, driving the worm 34 will cause the second element 12 to be rotated with respect to the first element about the axis B. The respective servo-motors may be linked so at to compensate automatically for differential movement; alternatively, the drive worm 34 may be mounted for bodily movement with the first element 10.

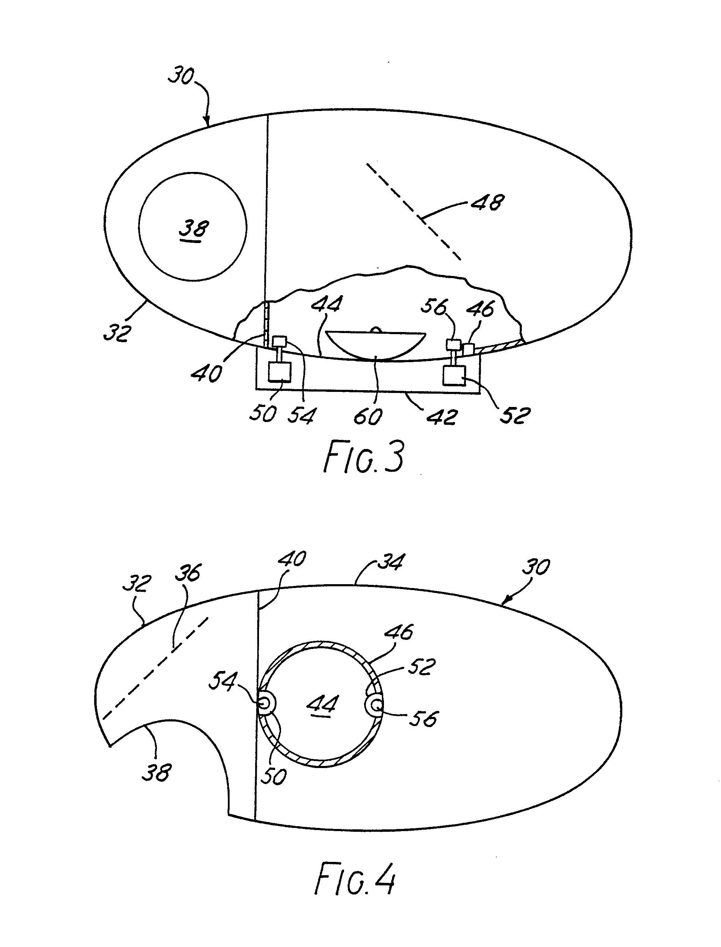

A further embodiment of the invention will now be described with reference to Figures 3 and 4. The device shown in the drawings comprises an ellipsoid body 30 which is hollow and which is formed from two unequal parts. The smaller body part 32 is mounted for rotation relative to the larger body part 34 about the major axis of the ellipsoid body. The smaller body part 32 is provided with a fixed mirror 36 which is positioned at 45° to the major axis. A circular aperture 38 is formed in the body part 32 and positioned such that light incident upon the mirror 36 along the major axis is reflected through the aperture 38. For a purpose to be described, the periphery of the smaller body part 32 which abuts the larger body part is provided with an internal annular gear train 40.

The larger body part 34 is mounted upon a base 42 for rotation relative to the base about the minor axis of the ellipsoid. The wall of the larger body part 34 is cut away in the region of the base to form an aperture 44 there being provided an annular gear train 46 in the larger body part about this aperture. A fixed mirror 48 is positioned in the larger body part so that light incident on this mirror 48 along the minor axis of the ellipsoid is reflected to the mirror 36.

The base is provided with two electric motors 50 and 52 having output gears 54 and 56 meshing respectively with the annular gear trains 40 and 46.

A light source 60 is arranged to produce a beam of light incident along the minor axis upon mirror 48. This light source may be positioned, as shown in the drawings, within the larger body part 34 but can alternatively be provided within the base or separately from the base. In the case of a separate light source, a suitable aperture is of course provided through the base.

It will be understood that scanning of the light beam is provided, in analogous fashion to the previously described embodiments, by rotation of the ellipsoid body 30 about the minor axis and by rotation of the smaller body part relative to the larger body part about the major axis. To achieve this, suitable control circuitry is provided for operating the drive motors in either of two modes. In a first mode, the motors are operated in synchronism with each other such that motor 52 causes scanning rotation of the body 30 whilst synchronous rotation of motor 54 ensures that the smaller body part 32 remains in the same orientation relative to the larger body part. In a second mode, motor 52 is stationary and motor 54 is driven to rotate smaller body part 32 relative to the larger body part.

In a preferred form the two motors are synchronous motors and are controlled in binary or an/off fashion. This enables the use of simple control circuitry whilst the relatively larger gear ratios between the output motor gears and the annular gear trains ensures that the necessary positional accuracy is achieved.

It should be understood that this invention has been described by way of example only and a wide variety of modifications are possible without departing from the scope of the invention. Principally, it will be appreciated by the skilled man that there exist a large number of mechanisms by which two mirrors can be mounted for movement in the described manner. The essential requirements of the mechanism are that each mirror should be arranged for controlled scanning movement to reflect in a direction orthogonal to the direction of incidence and that the second mirror should be mounted for bodily movement in unison with scanning movement of the first mirror. Moreover, in the described embodiments, the scanning movement is achieved by rotation about orthogonal axes. This is not felt to be an essential requirement. For example, the respective bearing surfaces of the elements 10 and 12 in Figure 1 might be disposed at any angle other than 90° to the direction B.

Whilst the description has referred to mirrors, it will be understood that prisms or other forms of reflecting elements can also be employed in the exercise of this invention.

## Claims

1. A beam-scanning device comprising a first reflecting element having a defined incident direction and mounted for controlled scanning movement to reflect a beam along a selected first reflected direction orthogonal to said incident direction; a second reflecting element supported to movebodily in unison with scanning movement of the first reflecting element so that light reflected from the first reflecting element is always incident upon the second reflecting element, the second reflecting element being mounted for controlled scanning movement to reflect the beam along a selected second reflected direction orthogonal to the first reflected direction, whereby the device is capable of directing an incident beam in substantially any desired reflected direction.

2. A device according to claim 1, wherein each reflecting element is fixedly mounted in a respective housing, the first housing being mounted for rotation about said defined incident direction and the second housing being mounted for rotation relative to the first housing about the first reflected direction.

3. A device according to claim 2, wherein first and second drive means are provided in a support, the first housing being mounted in said support, the first housing being mounted in said support for rotation about said defined incident direction.

4. A device according to claim 3, wherein first and second housings are provided with respective gear means engagable respectively with the first and second drive means.

5. A device according to claim 3 or claim 4 wherein the first and second drive means are operable in unison to effect controlled scanning movement of the first reflecting element and are operable with the first means stationary to effect controlled scanning movement of the second reflecting element.

6. A device according to claim 4, wherein the second housing gear means is engageable with the second drive means via intermediary gear means rotatable relative to the first housing.

7. A device according to claim 4, wherein the second housing gear means is directly engagable with the second drive means.

8. A device according to claim 4 of claim 7, wherein the second gear means comprises a ring gear disposed about said first reflected direction.

9. A device according to any one of claims 2 to 8, wherein the first and second housings comprise respective L-shaped hollow bodies.

10. A device according to any one of claims 2 to 8, wherein the first and second housings comprise respective hollow bodies having contiguous smooth outer surfaces.

0 226 428

FIG.1

FIG.2

FIG.3

FIG.4